Europäisches Patentamt

European Patent Office

Office européen des brevets

(11) Numéro de publication: **0 373 089**
**A1**

## (12) DEMANDE DE BREVET EUROPEEN

(21) Numéro de dépôt: **89470023.6**

(22) Date de dépôt: **21.11.89**

(51) Int. Cl.⁵: **B01D 47/02**

(30) Priorité: **09.12.88 FR 8816425**

(43) Date de publication de la demande:
**13.06.90 Bulletin 90/24**

(84) Etats contractants désignés:
**BE DE ES FR GB IT SE**

(71) Demandeur: **AIR INDUSTRIE SYSTEMES**
**124, boulevard de Verdun**
**F-92400 Courbevoie(FR)**

(72) Inventeur: **Patte, Philippe**
**45 Avenue de l'Armée Patton**
**F-54000 Nancy(FR)**
Inventeur: **Cordier, André**
**11 rue du Montoir**
**F-92140 Clamart(FR)**

(74) Mandataire: **Puit, Thierry et al**
**Centre de Recherches de Pont-à-Mousson**
**Service de Propriété Industrielle Boîte**
**Postale 109**
**F-54704 Pont-à-Mousson Cédex(FR)**

(54) **Dispositif de lavage d'un gaz pollué.**

(57) Dispositif de lavage d'un gaz pollué comportant un orifice supérieur (1) d'arrivée du liquide de lavage relié à un canal de ruissellement (4) par un canal de liaison (3) de forme divergente dont la divergence augmente de haut en bas, une paroi transversale (8) horizontale étant située en-dessous de l'orifice supérieur (1).

Application aux cabines de peinture pour véhicule automobile.

Fig. 1

EP 0 373 089 A1

## Dispositif de lavage d'un gaz pollué

La présente invention est relative à un dispositif de lavage de gaz pollué dans lequel le gaz pollué traverse une nappe de liquide de lavage.

La présente invention à plus particulièrement pour objet un dispositif de lavage de gaz contenant des particules solides et/ou liquides telles que des particules de peinture qui se trouvent dans l'air extrait de cabines de peinture telles que celles utilisées dans la peinture de carrosserie de véhicules automobiles.

On connaît déjà, par le brevet FR 2 456 541, un dispositif de lavage de gaz pollué dans lequel un liquide de lavage traverse de haut en bas ledit dispositif de lavage à co-courant du gaz pollué, le liquide de lavage étant recueilli dans un bassin de réception.

Dans ce dispositif, après un orifice supérieur par lequel arrive le liquide de lavage ainsi que le gaz pollué, ceux-ci débouchent dans un canal de liaison, présentant une forme divergente vers le bas et dont la divergence augmente de haut en bas, reliant l'orifice d'alimentation en liquide de lavage avec une paroi de ruissellement sensiblement verticale, une paroi transversale horizontale étant située en-dessous de l'orifice d'alimentation à la hauteur de la paroi de ruissellement.

Ainsi, le liquide de lavage, d'une part, ruisselle le long de la paroi de ruissellement, et, d'autre part, tombe sur la paroi transversale horizontale formant, par impact contre cette paroi, des gouttelettes qui sont toutes captées par la nappe de liquide qui ruisselle le long de la paroi de ruissellement après avoir fixé les particules en suspension dans le gaz circulant.

Ce dispositif permet une parfaite captation des particules en suspension dans le gaz pollué à traiter.

Malgré tout, il est apparu que, jusqu'à présent, aucun dispositif ne permettait d'assurer un ruissellement continu du liquide de lavage le long du canal de liaison reliant l'orifice d'alimentation en liquide de lavage avec la paroi de ruissellement.

Il apparaît ainsi, à la surface du canal de liaison, des zones sèches, où le liquide ne ruisselle jamais, où se fixent donc les particules en suspension dans le gaz pollué, ce qui entraîne un colmatage progressif du dispositif.

Ce colmatage du dispositif pose en outre un problème important, et jusqu'à présent non résolu, quant à la réalisation industrielle du dispositif.

En effet, le paramètre important dans un laveur de gaz pollué tel que celui décrit dans le brevet FR 2 456 541 est la perte de charge engendrée par la paroi transversale horizontale aussi appelée bouclier.

Or, comme déjà dit ci-dessus, le lavage du gaz est réalisé par les gouttelettes engendrées par la chute du liquide de lavage sur le bouclier, ces gouttelettes rebondissant vers la paroi de ruissellement où elles sont captées après avoir fixé les particules en suspension dans le gaz pollué.

Ainsi, il n'est pas possible de placer le bouclier à la hauteur du canal de liaison car, comme déjà dit ci-avant, ce canal présente des zones sèches où des gouttelettes chargées de particules viendraient s'écraser en encrassant ainsi ledit canal de liaison.

La seule possibilité pour modifier la perte de charge d'un tel dispositif consiste donc à élargir le dit bouclier en diminuant ainsi l'espace entre le bouclier et la paroi de ruissellement. La seule solution industriellement applicable a donc toujours consisté à arrêter l'installation en démontant l'ancien bouclier et en installant un nouveau. Ceci est bien évidemment couteux et long.

Par ailleurs, il est apparu par les mesures de bruit effectuées au-dessus de l'orifice d'alimentation en liquide, que, lors de son fonctionnement, un dispositif de lavage tel que celui-décrit ci-dessus était trop bruyant.

Plus particulièrement, et outre le niveau sonore général trop important d'un tel dispositif, le spectre sonore d'un tel dispositif montre un pic dans les fréquences graves, vers 300 Hz. Or, si les sons aigus sont relativement faciles à absorber par des matériaux isolants, il est bien connu que l'absorption des sons graves est beaucoup plus difficile.

La présente invention a donc pour but de réaliser un dispositif de lavage de gaz pollué du type décrit ci-avant mais qui, de plus, assure un ruissellement continu du liquide de lavage le long du canal de liaison en permettant par ailleurs de réduire le niveau sonore, particulièrement dans les graves.

Les caractéristiques et avantages apparaîtront au cours de la description qui va suivre faite en référence aux dessins annexés donnés uniquement à titre d'exemple non limitatif et parmi lesquels :

- la Fig. 1 représente une vue schématique générale du dispositif de lavage selon l'invention ;

- la Fig. 2 représente une variante du dispositif de lavage selon l'invention ;

- la Fig. 3 représente une autre variante du dispositif de lavage de l'invention ;

- la Fig. 4 représente le spectre sonore du dispositif de lavage selon l'invention lors de son fonctionnement

- la Fig. 5 représente le spectre sonore d'un dispositif de lavage antérieur lors de son fonctionnement.

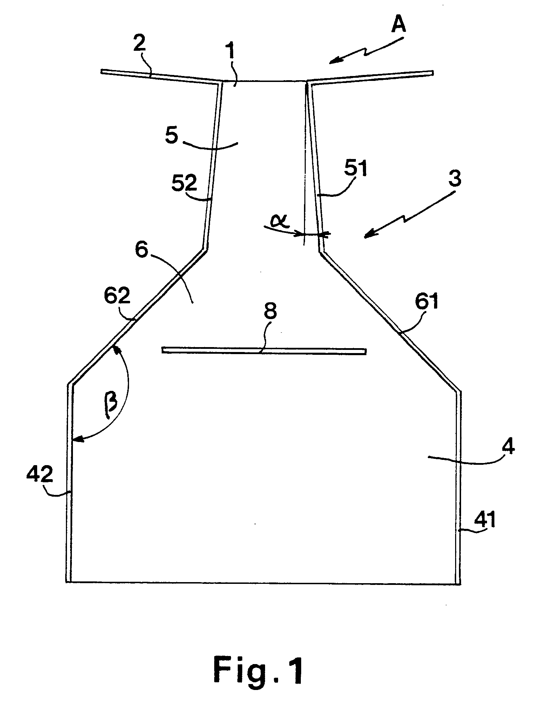

Comme on le voit Fig. 1, un dispositif A d'alimentation en liquide de lavage s'ouvre, à une face inférieure, par un orifice 1.

Ce dispositif A peut, comme représenté Fig. 1, être constitué par une paroi de ruissellement 2 alimentée par des goulottes de déversement non représentées, mais il pourrait être aussi constitué par un simple dispositif à trop plein, le trop plein étant alors constitué par l'orifice 1.

Quoiqu'il en soit, cet orifice 1 débouche vers le bas, dans un canal de liaison 3 divergent vers le bas dont la divergence augmente de haut en bas.

Un canal de ruissellement 4 présentant des parois 41 et 42 sensiblement verticales, est relié au canal de liaison 3, prolongeant vers le bas ce canal de liaison 3.

Les parois 41 et 42 du canal de ruissellement 4 font un angle de plus ou moins 5° par rapport à la verticale.

Comme on le voit Fig. 1, le canal de liaison 3 présente une partie amont 5 et une partie aval 6, la partie amont 5 étant reliée à l'orifice 1 d'alimentation en liquide de lavage et la partie aval 6 étant reliée au canal de ruissellement 4.

La partie amont 5 est formée de deux faces planes 51 et 52 formant un dièdre convergent vers le haut, de demi-angle au sommet $\alpha$ compris entre 0 et 10°, les deux faces 51 et 52 pouvant être parallèles.

La partie aval 6 est formée de deux faces planes 61 et 62 formant un dièdre convergent vers le haut, la face 61 étant reliée à la face 41 du canal de ruissellement 4 et la face 62 étant reliée à la face 42 du canal de ruissellement 4.

Selon une caractéristique avantageuse de l'invention, l'angle $\beta$ entre la face 61, respectivement 62, du canal de liaison 3 et la face 41, respectivement 42, du canal de ruissellement 4 est compris entre 125 et 145°.

En effet, le filet de liquide qui ruisselle le long de la partie aval 6, d'une part, ne doit pas se décoller de cette partie aval et, d'autre part, il ne doit apparaître aucun tourbillon à la liaison entre la partie aval 6 et le canal de ruissellement 4. Ces deux conditions de fonctionnement sont satisfaites si l'angle $\beta$ entre la face 61, respectivement 62 et la face 41, respectivement 42 est compris entre les deux valeurs limites exposées ci-dessus.

Selon le mode de réalisation représenté Fig.1, la partie amont 5 est directement reliée à la partie aval 6 sans interposition d'une partie médiane, l'angle $\alpha$ étant égal à 5°.

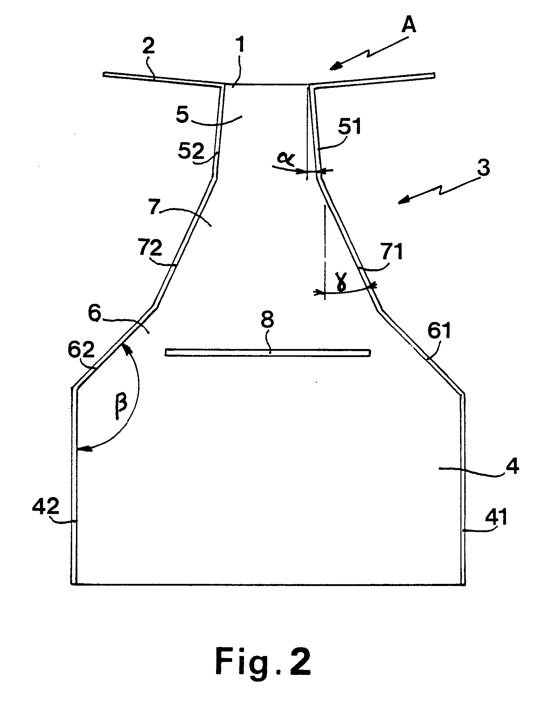

Selon un autre mode de réalisation selon l'invention, tel qu'illustré Fig.2, une partie médiane 7, constituée d'un dièdre formé par des faces planes 71 et 72, peut être interposée entre la partie amont 5 et la partie aval 6.

Dans ce cas, le canal de liaison est toujours divergent vers le bas, la divergence augmentant de haut en bas, le demi-angle au sommet $\gamma$ des deux faces planes 71 et 72 étant compris entre les angles $\alpha$ et $(180-\beta)$.

Comme on le voit sur les Fig.1 et 2, une paroi transversale 8, perpendiculaire au canal de ruissellement 4 est située en-dessous de l'orifice 1 à la hauteur de la partie aval 6 du canal de liaison 3.

Cette paroi transversale 8 est montée réglable en hauteur par des moyens non représentés. Ainsi il est possible de modifier la perte de charge engendrée par cette paroi transversale en levant ou en abaissant ladite paroi 8 et donc en approchant ou en écartant les bords de la paroi transversale 8 de la partie aval 6 du canal de liaison 3, la distance entre la partie aval 6 et la paroi 8 étant toujours plus faible que la distance entre la distance entre ladite paroi 8 et le canal de ruissellement 4.

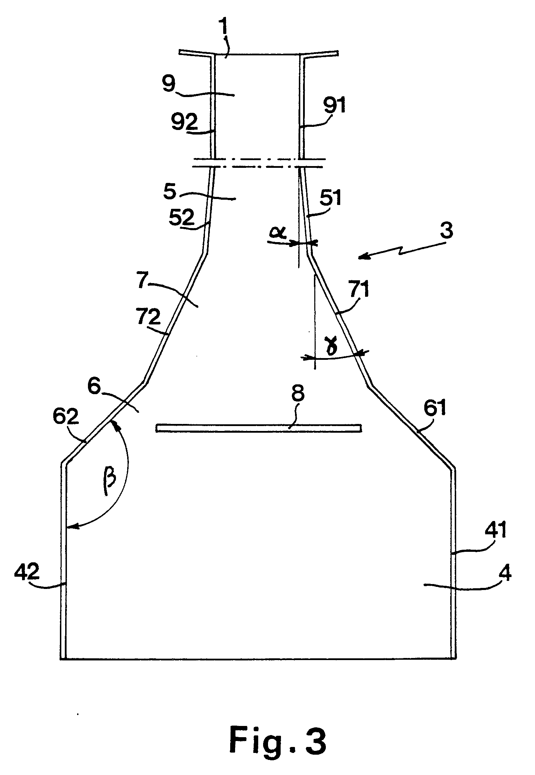

Selon une variante du dispositif selon l'invention illustrée Fig.3, la partie amont 5, dont le demi-angle au sommet est égal à 5°, est reliée à l'orifice 1 d'alimentation en liquide de lavage par une cheminée 9 constituée de deux faces planes parallèles verticales 91 et 92.

En effet, il est apparu, alors que rien ne pouvait le laisser supposer, que la combinaison de cette cheminée 9 avec le canal de liaison 3 et le canal de ruissellement 4 permettait d'obtenir un lavage beaucoup moins bruyant quand les proportions suivantes sont respectées.

Soit H1 la hauteur de la cheminée 9, soit H2 la hauteur de la partie amont 5, soit D la largeur de l'orifice 1, il faut que (H1 + H2) soient compris entre 3 x D et 5 x D, H1 étant compris entre 0,8 x H2 et 1,2 x H2.

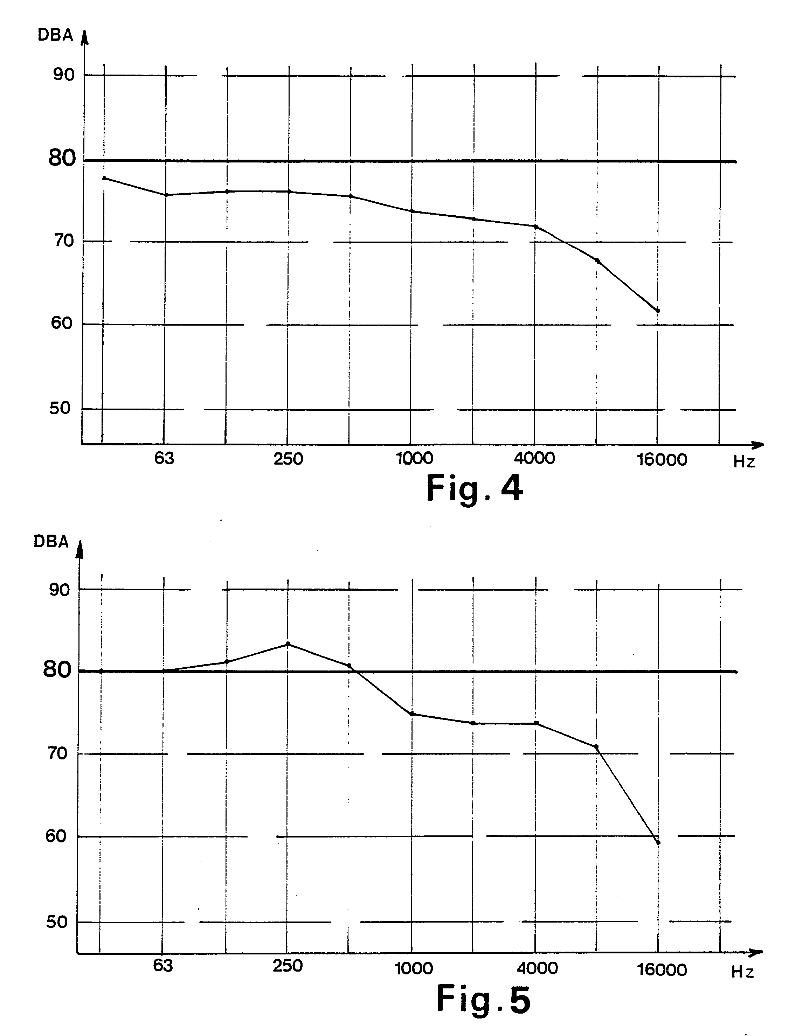

En effet, comme le montre la comparaison des spectres sonores aux Fig. 4 et 5, à conditions de fonctionnement identiques, le dispositif selon la présente invention permet une diminution du niveau sonore moyen qui passe de 83 DBA à 80 DBA, le gain étant particulièrement net sur les basses fréquences qui sont normalement les plus difficiles à atténuer.

La présente invention permet donc, en conservant la parfaite efficacité du dispositif de lavage d'air décrit dans le brevet FR 2 456 541, de supprimer le phénomène de fixation de la peinture à la surface du canal de liaison entre la paroi de ruissellement et l'orifice d'alimentation en liquide de lavage en diminuant par ailleurs de façon substantielle le niveau sonore et en autorisant l'utilisation d'un dispositif simple pour modifier à volonté la perte de charge de l'installation.

**Revendications**

1 - Dispositif de lavage d'un gaz pollué comportant un orifice supérieur (1) d'arrivée du liquide de lavage relié à un canal de ruissellement (4) par un canal de liaison (3) de forme divergente dont la divergence augmente de haut en bas, une paroi transversale (8) horizontale étant située en dessous de l'orifice supérieur (1), caractérisé en ce que une paroi (41, 42) du canal de ruissellement (4) faisant un angle de plus ou moins 5° par rapport à la verticale est reliée à une paroi (61, 62) d'une partie aval (6) du canal de liaison (3) en faisant avec cette paroi (61, 62) un angle β de 125° à 145°.

2 - Dispositif selon la revendication 1 caractérisé en ce que l'orifice supérieur (1) d'arrivée du liquide de lavage est poursuivi vers le bas par une partie amont (5) du canal de liaison (3) constituée de deux faces (51- 52) formant un dièdre convergent vers le haut de demi-angle au sommet compris entre 0° et 10°.

3 - Dispositif selon la revendication 2 caractérisé en ce que la paroi transversale (8) située en dessous de l'orifice d'arrivée (1) est située à la hauteur de la partie aval (6) du canal de liaison (3).

4 - Dispositif selon la revendication 2 caractérisé en ce que le demi-angle au sommet des deux faces (51-52) de la partie amont (5) est égal à 5°.

5 - Dispositif selon la revendication 4 caractérisé en ce que la partie amont (5) du canal de liaison (3) est reliée à l'orifice d'arrivée (1) par une cheminée (9).

6 - Dispositif selon la revendication 5 caractérisé en ce que, soient H1 la hauteur de la cheminée (9), H2 la hauteur de la partie amont (5), D la largeur de l'orifice d'arrivée (1), (H1 + H2) est compris entre 3 x D et 5 x D, H1 étant compris entre 0,8 x H2 et 1,2 x H2.

**Fig. 1**

**Fig. 2**

Fig. 3

Fig. 4

Fig. 5

**Office européen des brevets**

# RAPPORT DE RECHERCHE EUROPEENNE

Numero de la demande

EP 89 47 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 423 448 (W.C. HOLMES & CO. LTD) * En entier * --- | 1-3 | B 01 D 47/02 |
| A,D | FR-A-2 456 541 (AIR INDUSTRIE) ----- | | |
| | | | **DOMAINES TECHNIQUES RECHERCHES (Int. Cl.5)** |
| | | | B 01 D 47/00 |

Le présent rapport a été établi pour toutes les revendications

| Lieu de la recherche | Date d'achèvement de la recherche | Examinateur |
|---|---|---|
| LA HAYE | 29-12-1989 | POLESAK, H.F. |